# EUROPÄISCHE PATENTSCHRIFT

(11) **EP 2 060 311 B1**
(45) Veröffentlichungstag und Bekanntmachung des Hinweises auf die Patenterteilung: **11.05.2011**
(21) Anmeldenummer: 08167401.2
(22) Anmeldetag: 23.10.2008
(51) Int. Cl.: B01D 39/16

(54) **Luftfiltermedium**
Air filter medium
Milieu de filtre à air

(30) Priorität: 14.11.2007 DE 202007015994 U
(43) Veröffentlichungstag der Anmeldung: 20.05.2009
(73) Patentinhaber: Wolf PVG GmbH & Co. Kommanditgesellschaft, 32602 Vlotho-Exter (DE)
(72) Erfinder: Czado, Wolfgang, 32429, Minden (DE)
(74) Vertreter: Dantz, Jan Henning

(56) Entgegenhaltungen:
- EP-A- 0 705 931
- EP-A- 1 161 978
- DE-A1- 4 307 398
- FR-A- 2 097 234

## Beschreibung

Die vorliegende Erfindung betrifft ein Luftfiltermedium, insbesondere für einen Staubsaugerbeutel.

Es gibt Luftfiltermedien die aus drei bis sechs Lagen unterschiedlicher Filtermedien wie Meltblown und Spunbond bestehen. Hochwertigere Beutel weisen darüber hinaus oft noch eine weitere Schicht zu Vorfilterung der Luft auf, die üblicherweise Krempel oder Airlaid-Vliese aus Polyester oder Mischungen aus Pulp und Polyester-Bicomponentenbindefaser sind, die mit Spunbondschichten verstärkt sein können. Hierbei werden zur Herstellung von Krempel oder Airlaidvliese mehrere Herstellungsschritte benötigt, da geschnittene Fasern (Fasern für Krempelvliese sind typischerweise 20-100 mm lang, Fasern für Airlaidvliese sind typischerweise 3 - 10 mm kurz) eingesetzt werden, die erst in weiteren, aufwendigen Verfahrensschritten zu einem Vlies verfestigt werden und es besonderer Anstrengungen wie dem Einsatz von Bikomponentenfaser oder gekräuselter Fasern bedarf, um ein voluminöses, eigenfestes Vlies herzustellen.

Die EP 0 705 931 A1 offenbart einen Vliesstoff aus Elektretfasern, mit verbesserter Ladungsstabilität und Ladungsausbildung, bei gleichbleibender Filterwirksamkeit. Der Vliesstoff kann dabei aus Endlosfasern bestehen.

Die EP 1 161 978 A1 offenbart eine Filteranordnung in Klimaanlagen für die Reinigung von in Gebäuden umgewälzter Luft. Das Filtermaterial der Filteranordnung kann dabei u.a. aus einem Endlosfaser-Polypropylen-Vlies bestehen.

Gemäß dem Stand der Technik wird in einer Anlage zur Herstellung von Spunbondvliesen eine Polymerschmelze mittels eines Düsenbalkens zu einzelnen Filamenten versponnen, die nach einer Kühl- und Verstreckungsstrecke auf einem Siebband abgelegt werden und typischerweise mittels eines thermischen oder ultraschall Prägekalanders bei einem Anpressdruck von mehr als 50 bar zu einem stark komprimierten, typischerweise 0.2 - 1 mm dünnen und reißfesten Vlies verfestigt werden, bei dem an den Verfestigungspunkten (ca. 10 - 30 pro cm²) die Fasern vollständig plastifiziert und miteinander verschmolzen worden sind, was vergleichsweise aufwendig ist.

Es ist daher Aufgabe der vorliegenden Erfindung, ein Luftfiltermedium zu schaffen, das sich einfach und kostengünstig herstellen lässt.

Diese Aufgabe wird mit einem Luftfiltermedium mit den Merkmalen des Anspruches 1 gelöst.

Überraschenderweise hat sich gezeigt, dass insbesondere die Vorfilterlagen eines Luftfiltermediums in einfacher Weise durch ein trockengelegtes Vlies mit Endlosfasern gebildet werden können, wobei das trockengelegte Vlies mit den Endlosfasem sich effektiv herstellen lässt.

Die Fasern werden beim Herstellen vorzugsweise bei minimalem Anpressdruck von weniger als 10 bar des Prägekalanders nur an der Oberfläche der der Prägewalze zugewandten Seite leicht verfestigt, so dass des erhaltene Vlies eine unverfestigte, flauschige Seite aufweist und eine leicht verfestigte Seite, die eine Handhabung des Materials wie Auf- und Umwickeln erlaubt.

Der Einsatz von Endlosfasern hat mehrere Vorteile:
1. Eine einfache Herstellung in einem Schritt, was eine Verbesserung gegenüber der aufwendigen Herstellung eines Airlaids oder Krempelvlieses darstellt, da mehrere Verfahrensschritte wegfallen;
2. der Einsatz von Endlosfasern ist kostengünstiger, da keine teure Bicomponenten-Klebefaser benötigt wird;
3. es besteht eine bessere Filterleistung, da Endlosfasern aus PP elektrostatisch aufgeladen werden können, was bei typischen Airlaids mit Pulp nicht möglich ist.

Ein weiterer Vorteil ist die Erzielung eines Dichtegradienten in der Lage des Filtermediums, der sich vorteilhaft auf die Filterwirkung und Staubspeicherfähigkeit auswirkt, indem auf der flauschigen Seite zunächst größere Partikel abgeschieden und in dem Vlies gespeichert werden können und bei zunehmender Dichte und somit abnehmender Porengröße auch feinere Partikel abgeschieden werden.

Eine Verbesserung der mechanischen Eigenschaften wird erreicht, wenn weitere Fasern, vorzugsweise ein Spunbondvlies, zugefügt sind und die Endlosfasern auf den weiteren Fasern bzw. dem Spunbonvlies abgelegt sind. Dadurch wird erreicht, dass die Lage auf einer Seite verfestigt ist und auf der gegenüberliegenden Seite die Flauschigkeit beibehält. Es können auch Bicomponenten-Fasern als weitere Fasern verwendet werden.

In einer vorteilhaften Ausgestaltung der Erfindung besitzen die Endlosfasern einen elektrischen Oberflächenwiderstand > 10E12 Ohm/cm gemäß DIN 53482 und sind somit dauerhaft elektrostatisch aufladbar. Dadurch wird eine besonders gute Staubabscheidung erreicht.

Besonders vorteilhaft ist es, wenn in die Endlosfasern ein weiteres Fasermaterial, in Form von Kurzfasern mit einer Länge von 3 bis 100 mm mit in die Lage eingebracht sind, was durch Einbringung in der Nähe der Position der Faserablage, wie dem Versteckungskanal einfach möglich ist, bzw. eine nachfolgende Ablage auf den Endlosfasern und Einbringung in diese per Vernadelung oder per Druckluft oder Wasserstrahlen oder andere üblicher Verfahren.

Besonders vorteilhaft ist es dabei, wenn die weiteren Fasern einen Unterschied von mehr als 0.5, vorzugsweise mehr als 1 oder 1,5, in ihrer Dielektrizitätskonstanten gemäß DIN 53483 bei 50Hz gegenüber den Endlosfasern aufweisen und so in der Lage sind, sich triboelektrisch gegensinnig aufzuladen. Eine elektrostatische Aufladung kann zudem über eine zusätzliche Behandlung der Lage erfolgen.

Besonders vorteilhaft für die weitere Verarbeitung ist es, wenn die Endlosfasern zwischen zwei weiteren Vlieslagen eingebracht sind, die entweder eine hohe Festigkeit aufweisen, wie z.B. Spunbondvliese oder aber Vliese mit einer hohen Filterleistung, wie z.B. Meltblowvliese. Eine noch höhere Festigkeit kann dann erreicht werden, wenn die Vlieslagen miteinander verbunden, vorzugsweise verklebt werden, wie dies durch thermisches oder ultraschall Prägekalandern erfolgen kann.

Zudem kann in einer weiteren Ausgestaltung ein drittes Fasermaterial in die Lage eingebracht sein, das einen geringeren elektrischer Oberflächenwiderstand als 10E12 Ohm/cm gemäß DIN 53482 aufweist. Das dritte Fasermaterial kann dabei zur Auflockerung der Lage stark gebogene oder spiralförmige Fasern umfassen.

Ganz besonders vorteilhaft ist es wenn eines der Deckvliese eine hohe Festigkeit aufweist, z.B. Spunbondvlies, das andere Deckvlies dagegen eine hohe Filterleistung, z.B. Meltblow, da in diesem Fall in einfacher Art und Weise ein Composit Filtennedium geschaffen werden kann, das durch eine Lage Spunbond eine hohe mechanische Stabilität aufweist, die Lage aus flauschiger Endlosfaser als Vorfilter wirkt und somit eine hohe Staubspeicherfähigkeit und somit Lebensdauer bereitstellt und die Lage Meltblow eine hohe Filterleistung bewirkt.

Vorzugsweise umfasst das Luftfiltermedium eine Kombination verschiedener Lagen aus Filtermaterial, nämlich ein Grobstaubspeicher, ein Feinfilter und eine stabilisierenden Lage. Dabei kann der Grobstaubspeicher Schmutz von weniger als 1mm speichern und eine Luftdurchlässigkeit von mehr als 10001/qm x s, eine Dicke von 0.5 - 5 mm, vorzugsweise 1 - 2 mm und einem Flächengewicht zwischen 20 - 200 g/qm aufweisen. Der Feinfilter speichert feinen Schmutz von mehr als 0.0001 mm und weist eine Luftdurchlässigkeit von weniger als 2001/qm x s, eine Dicke von weniger als 0.5 mm und ein Flächengewicht zwischen 15 - 80 g/qm auf.

Die stabilisierenden Lage weist vorzugsweise eine Luftdurchlässigkeit von mehr als 500 1/qm x s, eine Dicke von weniger als 1 mm und ein Flächengewicht zwischen 15 - 100 g/qm auf und kann z.B. aus einem Spinnvlies, einem Gittergelege oder einer perforierten oder geschlitzten Folie bestehen.

In einer weiteren Ausgestaltung ist eine zusätzliche Feinstfilterschicht in Form einer Lage aus Nanofasern mit einem Faserdurchmesser von 10 - 2000 nm vorgesehen, wobei die Nanofaserschicht feinen Schmutz zurückhält und eine Luftdurchlässigkeit von mehr als 500 1/qm x s, eine Dicke von weniger als 0.1 mm und ein Flächengewicht zwischen 0.01 - 2 g/qm aufweist. Die Nanofaserschicht kann dabei direkt auf der Feinfilterschicht, z.B. einem Meltblow abgelegt seni.

Folgende Polymere bzw. Fasern sind dabei für Zumischungen zur Herstellung des Luftfiltermediums besonders geeignet:
PE, PP, PS, ABS, PAN, PES, PC, PMMA, PA, PUR, TPU, PES, PVA, POM, EVA, PEO, PVC, Cellulose, Viskose, Melamin, Wolle, Baumwolle, Glaswolle, Steinwolle

## Patentansprüche

1. Luftfiltermedium, insbesondere für einen Staubsaugerbeutel, mit zumindest einer Lage aus einem trockengelegten Vlies, wobei das Vlies eine polymere Endlosfaser aufweist, **dadurch gekennzeichnet, dass** die Lage einen Dichtegradienten und somit einen Gradienten in der Porengröße aufweist, wobei die Anströmseite der Poren größer 1 mm aufweist, die Abströmseite dagegen Poren kleiner 0,5 mm, vorzugsweise kleiner 0,2 mm aufweist.

2. Luftfiltermedium nach Anspruch 1, **dadurch gekennzeichnet, dass** die Endlosfasern einen elektrischen Oberflächenwiderstand > 10E12 Ohm/cm gemäß DIN 53482 besitzen und die Endlosfasern somit dauerhaft elektrostatisch aufladbar sind.

3. Luftfiltermedium nach Anspruch 1 oder 2, **dadurch gekennzeichnet, dass** in der Lage aus trockengelegtem Vlies zusätzlich ein weiteres Fasermaterial, vorzugsweise eine Stapelfaser, eingebracht ist.

4. Luftfiltermedium nach Anspruch 3, **dadurch gekennzeichnet, dass** das weitere Fasermaterial und die Endlosfasern eine um mindestens den Wert 1, vorzugsweise um mindestens den Wert 1,5, unterschiedliche Dielektrizitätskonstante gemäß DIN 53483 bei 50Hz aufweisen und in der Lage sind, sich triboelektrisch gegensinnig aufzuladen.

5. Luftfiltermedium nach Anspruch 3 oder 4, **dadurch gekennzeichnet, dass** als weiteres Fasermaterial Bicomponenten Stapelfasern eingebracht sind, welche mit den Endlosfasern verklebt sind.

6. Luftfiltermedium nach einem der vorhergehenden Ansprüche, **dadurch gekennzeichnet, dass** ein drittes Fasermaterial in die Lage eingebracht ist, das einen geringeren elektrischer Oberflächenwiderstand als 10E12 Ohm/cm gemäß DIN 53482 aufweist.

7. Luftfiltermedium nach Anspruch 6, **dadurch gekennzeichnet, dass** das dritte Fasermaterial stark gebogene oder spiralförmige Fasern umfasst.

8. Luftfiltermedium nach einem der vorhergehenden Ansprüche, **dadurch gekennzeichnet, dass** das Luftfiltermedium elektrostatisch geladen ist, z.B. durch eine Plasma oder Corona Behandlung, oder tribologisch durch Vemadeln oder anderweitige Einbringung mechanischer Reibung oder Beanspruchung, wie z.B. Druckluftstrahlen.

9. Luftfiltermedium nach einem der vorhergehenden Ansprüche, **dadurch gekennzeichnet, dass** das eine Kombination verschiedener Lagen an Filtermaterial miteinander verbunden sind, nämlich ein Grobstaubspeicher, ein Feinfilter und eine stabilisierenden Lage.

10. Luftfiltermedium nach Anspruch 7, **dadurch gekennzeichnet, dass** der Grobstaubspeicher Schmutz von weniger als 1mm speichert und eine Luftdurchlässigkeit von mehr als 10001/qm x s, eine Dicke von 0.5 - 5 mm, vorzugsweise 1 - 2 mm und einem Flächengewicht zwischen 20 - 200 g/qm aufweist, der Feinfilter feinen Schmutz von mehr als 0.0001 mm zurückhält, und eine Luftdurchlässigkeit von weniger als 2001/qm x s, eine Dicke von weniger als 0.5 mm und ein Flächengewicht zwischen 15 - 80 g/qm aufweist.

11. Luftfiltermedium nach einem der vorhergehenden Ansprüche, **dadurch gekennzeichnet, dass** die stabilisierenden Lage eine Luftdurchlässigkeit von mehr als 500 1/qm x s, eine Dicke von weniger als 1 mm und ein Flächengewicht zwischen 15 - 100 g/qm aufweist und vorzugsweise aus einem Spinnvlies, einem Gittergelege oder einer perforierten oder geschlitzten Folie besteht.

12. Luftfiltermedium nach einem der vorhergehenden Ansprüche, **dadurch gekennzeichnet, dass** ein eine zusätzliche Feinstfilterschicht in Form einer Lage aus Nanofasern mit einem Faserdurchmesser von 10 - 2000 nm vorgesehen ist, wobei die Nanofaserschicht feinen Schmutz zurückhält und eine Luftdurchlässigkeit von mehr als 500 l/qm x s, eine Dicke von weniger als 0.1 mm und ein Flächengewicht zwischen 0.01 - 2 g/qm aufweist.

13. Luftfiltermedium nach Anspruch 12, **dadurch gekennzeichnet, dass** die Nanofaserschicht direkt auf der Feinfilterschicht, z.B. einem Meltblow abgelegt.

## Claims

1. Air filter medium, particularly for a vacuum cleaner bag, with at least one layer of a dry-laid non-woven material, wherein the non-woven material comprises a polymer endless fibre, **characterised in that** the layer has a density gradient and thus a gradient in the pore size, wherein the inflow side has pores greater than 1 millimetre and the outflow side, thereagainst, has pores smaller than 0.5 millimetres, preferably smaller than 0.2 millimetres.

2. Air filter medium according to claim 1, **characterised in that** the endless fibres have an electrical surface resistance greater than 10E12 ohms/centimetre according to DIN 53482 and the endless fibres are thus permanently electrostatically chargeable.

3. Air filter medium according to claim 1 or 2, **characterised in that** a further fibre material, preferably a staple fibre, is additionally introduced into the layer of dry-laid non-woven material.

4. Air filter medium according to claim 3, **characterised in that** the further fibre material and the endless fibres have dielectric constants which differ by at least the value 1, preferably by at least the value 1.5, according to DIN 53483 at 50 Hz and are in a position of mutual triboelectric charging.

5. Air filter medium according to claim 3 or 4, **characterised in that** bi-components of stable fibres which are glued to the endless fibres are introduced as further fibre material.

6. Air filter medium according to any one of the preceding claims, **characterised in that** a third fibre material having an electrical surface resistance smaller than 10E12 ohms/centimetre according DIN 53482 is introduced into the layer.

7. Air filter medium according to claim 6, **characterised in that** the third fibre material comprises strongly curved or spiral fibres.

8. Air filter medium according to any one of the preceding claims, **characterised in that** the air filter medium is electrostatically charged, for example by a plasma or corona treatment, or tribologically by needling or other form of introduction of mechanical friction or loading, such as, for example, compressed air jets.

9. Air filter medium according to any one of the preceding claims, **characterised in that** a combination of different layers are connected together to form filter material, namely a coarse dust store, a fine filter and a stabilising layer.

10. Air filter medium according to claim 7, **characterised in that** the coarse dust store stores dirt of less than 1 millimetre and has an air permeability of more than 1000 l/m² x s, a thickness of 0.5 to 5 millimetres, preferably 1 to 2 millimetres and a weight per unit area of between 20 and 200 g/m², and the fine filter retains fine dirt of more than 0.0001 millimetres and has an air permeability than less than 200 l/m² x s, a thickness of less than 0.5 millimetres and a weight per unit area of between 15 and 80 g/m².

11. Air filter medium according to any one of the preceding claims, **characterised in that** the stabilising layer has an air permeability of more than 500 l/m² x s, a thickness of less than 1 millimetre and a weight per unit area of between 15 and 100 g/m² and preferably consists of a spin-bonded material, a lattice material or a perforated or slit film.

12. Air filter medium according to any one of the preceding claims, **characterised in that** an additional highly fine filter layer in the form of a layer of nanofibres with a fibre diameter of 10 to 2000 nanometres is provided, wherein the nanofibre layer retains fine dirt and has an air permeability of more than 500 l/m² x s, a thickness of less than 0.1 millimetres and a weight per unit area of between 0.01 and 2 g/m².

13. Air filter medium according to claim 12, **characterised** that the nanofibre layer is deposited directly on the fine filter layer, for example a meltblow.

## Revendications

1. Milieu de filtre à air en particulier pour un sac d'aspirateur comportant au moins une couche d'un voile asséché, ce voile comportant une fibre polymère continue,
**caractérisé en ce que**
la couche présente un gradient de densité et par suite un gradient de dimensions de pores, la face amont présentant des pores supérieurs à 1 mm alors qu'au contraire, la face aval présente des pores inférieurs à 0,5 mm, de préférence inférieurs à 0,2 mm.

2. Milieu de filtre à air conforme à la revendication 1,
**caractérisé en ce que**
les fibres continues présentent une résistance électrique superficielle > 10E12 Ohm/cm selon DIN 53482, et les fibres continues peuvent ainsi être chargées électrostatiquement de façon durable.

3. Milieu de filtre à air selon la revendication 1 ou la revendication 2, **caractérisé en ce que**
la couche de voile asséché renferme en outre un autre matériau fibreux, de préférence des fibres discontinues.

4. Milieu de filtre à air selon la revendication 3,
**caractérisé en ce que**
l'autre matériau fibreux auxiliaire et les fibres continues, présentent des constantes diélectriques selon DIN 53483 à 50Hz différentes d'au moins la valeur 1, de préférence d'au moins la valeur 1,5 et sont susceptibles de se charger triboélectriquement en sens inverse.

5. Milieu de filtre à air selon la revendication 3 ou la revendication 4, **caractérisé en ce qu'**
en tant qu'autre matériau fibreux, on met en oeuvre des fibres discontinues bicomposants qui sont collées aux fibres continues.

6. Milieu de filtre à air selon l'une des revendications précédentes, **caractérisé en ce que**
la couche renferme un troisième matériau fibreux qui présente une résistance électrique superficielle inférieure à 10E12 Ohm/cm selon DIN 53482.

7. Milieu de filtre à air selon la revendication 6,
**caractérisé en ce que**
le troisième matériau fibreux renferme des fibres fortement courbées ou en forme de spirales.

8. Milieu de filtre à air selon l'une des revendications précédentes, **caractérisé en ce qu'**
il est chargé électrostatiquement par exemple par traitement au plasma ou traitement Corona ou tribologiquement par aiguilletage ou autre moyen d'introduction de friction ou de sollicitation mécanique, par exemple à l'aide de jets d'air comprimé.

9. Milieu de filtre à air selon l'une des revendications précédentes, **caractérisé en ce que**
différentes couches combinées de matériau filtrant sont reliées entre elles, à savoir un accumulateur de poussières grossières, un filtre fin et une couche de stabilisation.

10. Milieu de filtre à air selon la revendication 7,
**caractérisé en ce que**
l'accumulateur de poussières grossières accumule des salissures de moins de 1 mm et présente une perméabilité à l'air de plus de 1000 l/qm x s, une épaisseur de 0,5 - 5 mm, de préférence de 1 - 2 mm et un poids surfacique compris entre 20 - 200 g/qm, et le filtre fin retient des salissures fines de plus de 0,0001 mm et présente une perméabilité à l'air inférieure à 200 1/qm x s, une épaisseur de moins de 0,5 mm et un poids surfacique compris entre 15-80 g/qm.

11. Milieu de filtre à air selon l'une des revendications précédentes, **caractérisé en ce que**
la couche de stabilisation présente une perméabilité à l'air supérieure à 500 1/qm x s, une épaisseur de moins de 1 mm et un poids surfacique compris entre 15-100 g/qm, et est de préférence constituée par un voile filé, un élément en treillis ou une feuille perforée ou fendue.

12. Milieu de filtre à air selon l'une des revendications précédentes, **caractérisé en ce qu'**
il est prévu une couche de filtrage très fin supplémentaire sous la forme d'un couche de nano fibres ayant un diamètre de 10 - 2000 nm, cette couche de nano fibres retenant les fines salissures et présentant une perméabilité à l'air de plus de 500 1/qm x s, une épaisseur de moins de 0,1 mm et un poids surfacique compris entre 0,01 - 2 g/qm.

13. Milieu de filtre à air selon la revendication 12,
**caractérisé en ce que**
la couche de nano fibres est directement déposée sur la couche de filtrage fin, par exemple par fusion soufflage.
